# EUROPÄISCHE PATENTSCHRIFT

(11) **EP 1 481 429 B1**
(45) Veröffentlichungstag und Bekanntmachung des Hinweises auf die Patenterteilung: **31.05.2006**
(21) Anmeldenummer: 03720148.0
(22) Anmeldetag: 07.03.2003
(51) Int. Cl.: H01M 2/36, C25B 15/08

(54) **VERFAHREN UND VORRICHTUNG ZUM EINFÜLLEN FLÜCHTIGER FLÜSSIGKEITEN IN GEHÄUSE ELEKTRISCHER BAUELEMENTE UND ZUM VERSCHLIESSEN DER GEHÄUSE**
METHOD AND DEVICE FOR FILLING HOUSINGS OF ELECTRIC COMPONENTS WITH VOLATILE LIQUIDS AND FOR SEALING SAID HOUSINGS
PROCEDE ET DISPOSITIF POUR REMPLIR DES BOITIERS DE COMPOSANTS ELECTRIQUES DE LIQUIDES VOLATILS ET POUR FERMER CES BOITIERS

(30) Priorität: 08.03.2002 DE 10210110; 26.08.2002 DE 10239046
(43) Veröffentlichungstag der Anmeldung: 01.12.2004
(73) Patentinhaber: EPCOS AG, 81669 München (DE)
(72) Erfinder: ERHARDT, Werner, 89177 Ballendorf (DE); SCHWAKE, Andree, 89520 Heidenheim (DE)
(74) Vertreter: Epping - Hermann - Fischer
(86) Internationale Anmeldenummer: PCT/DE2003/000737
(87) Internationale Veröffentlichungsnummer: WO 2003/077328

(56) Entgegenhaltungen:
- DE-A- 19 518 152
- DE-C- 19 911 800
- US-A- 3 443 352
- US-A- 3 479 793
- US-A- 4 086 741
- US-A- 4 905 454

## Beschreibung

Die Erfindung bezieht sich auf ein Verfahren zum Einfüllen von flüchtigen Flüssigkeiten in Gehäuse elektrischer Bauelemente, insbesondere passiver elektrischer Bauelemente oder elektrochemischer Zellen, und zum Verschließen der Gehäuse.

Die Erfindung bezieht sich weiter auf eine Vorrichtung zum Einfüllen von flüchtigen Flüssigkeiten in Gehäuse elektrischer Bauelemente, insbesondere passiver elektrischer Bauelemente oder elektrochemischer Zellen, und zum Verschließen der Gehäuse.

Derartige Bauelemente sind unter den passiven elektrischen Bauelementen elektrische Doppelschichtkondensatoren, Hybridkondensatoren, Pseudokondensatoren oder weitere Bauelemente, die mit einem Elektrolyten als Flüssigkeit befüllt und insbesondere imprägniert werden müssen. Als Imprägnieren ist hier das Tränken bestimmter in dem Gehäuse angeordneter Elemente des Bauelements zu verstehen, die sich quasi vollsaugen müssen. Als elektrochemische Zellen kommen unter anderen Lithium-Ionen-Zellen, resp. derartige Batterien oder Lithium-Thionylchlorid-Zellen sowie Litium-Schwefeldioxid-Zellen in Betracht, die ebenfalls mit einem Elektrolyten befüllt bzw. imprägniert werden.

Die als Elektrolyt verwendeten Flüssigkeiten sind in der Regel flüchtig und gesundheitsschädlich sowie leicht entzündlich, so dass ihre Verarbeitung unter besonderen Schutzvorkehrungen erfolgen muss. Weiterhin müssen die Flüssigkeiten möglichst rein sein, damit das Imprägnieren der Bauelemente zu guten elektrischen Langzeiteigenschaften führt. Als Verunreinigung ist insbesondere Wasser schädlich, da dieses bereits unterhalb der normalen Zellspannung elektrochemisch zersetzt wird, was die Zellen irreversibel schädigen würde.

Im folgenden wird als repräsentatives elektrisches Bauelement ein Doppelschichtkondensator erläuternd herangezogen. Es versteht sich jedoch von selbst, dass die Erfindung auch auf andere Bauelemente bzw. Gehäuse von Bauelementen ohne weiteres anwendbar ist.

Jeder elektrochemische Doppelschichtkondensator kann einzeln an der Einfülloffnung mit einem Einfüllstutzen kontaktiert werden. Über diesen Einfüllstutzen wird das Bauelementgehäuse zunächst bis unter den Dampfdruck des leicht flüchtigen organischen Elektrolyten evakuiert, um dann in den evakuierten elektrochemischen Doppelschichtkondensator die leicht flüchtige Flüssigkeit wie z.B. einen leicht flüchtigen organischen Elektrolyten einströmen zu lassen. Dabei kommt es zur massiven Verdampfung des leicht flüchtigen Lösungsmittels der Flüssigkeit und dadurch bereits nach geringer Stückzahl zur Verstopfung der Zuleitungen durch das nach der Verdampfung des leicht flüchtigen Elektrolyten zurückbleibende Leitsalz. Darüberhinaus entstehen beim Entfernen des Einfüllstutzens von der Einfülloffnung durch Verdampfung des leicht flüchtigen Elektrolyten Kristalle des Leitsalzes. Diese Salzkristalle führen nach dem Verschließen der Einfüllöffnung z.B. mit einer Niet zu Undichtigkeiten, was die Ausbeute verschlechtert.

Wird das Imprägnieren nicht mit Hilfe einer Evakuierung des Gehäuses des Bauelements, sondern über ein Hineindrücken des Elektrolyten in den elektrochemischen Doppelschichtkondensator mit Hilfe von Überdruck durchgeführt, so kommt es durch die Verdrängung des Gasinnenvolumens durch den hineingedrückten Elektrolyten zu einer sehr starken Gasblasenbildung. Dies führt schließlich dazu, daß erhebliche Mengen des Elektrolyten durch die Einfüllöffnung aus dem elektrochemischen Doppelschichtkondensator wieder herauslaufen. Durch das Verdampfen des leicht flüchtigen organischen Elektrolyten und die Bildung von Kristallen des Leitsalzes am Einfüllstuzen ist ein Verschließen des Einfüllstuzens z. B. mit einer Niet nicht möglich.

Eine weitere Möglichkeit zum Einfüllen einer flüchtigen Flüssigkeit in eines der genannten Bauelemente kann durch Tauchimprägnieren erfolgen. Dabei wird beispielsweise der gesamte elektrochemische Doppelschichtkondensator in der leicht flüchtigen Flüssigkeit wie dem organischen Elektrolyten untergetaucht. Auch dabei verbleiben Kristalle des Leitsalzes an der Einfüllöffnung, so daß auch bei diesem Prozeß Undichtigkeiten beim Verschließen des Bauelements entstehen. Darüberhinaus ist die imprägnierte Menge der leicht flüchtigen Flüssigkeit mit einer derartigen Imprägnierung nicht steuerbar, da sich alle Bauelemente unterschiedlich stark vollsaugen. Außerdem kommt es beim Tauchimprägnieren zu einer Benetzung der Gehäuseaussenflächen, was eine zusätzliche Nachreinigung unerläßlich macht. Schließlich führt diese Form der Imprägnierung zu einem großen Verbrauch der leicht flüchtigen Flüssigkeit.

Keine der vorgenannten Möglichkeiten zum Einfüllen der leicht flüchtigen Flüssigkeit in das Gehäuse und zu dessen Verschließen ist für eine Produktion größerer Stückzahlen geeignet, da die Prozessbedingungen sich zeitlich verändern. Die genannten Vorgehensweisen sind umständlich und vor allem teuer.

Der Erfindung liegt die Aufgabe zu Grunde, ein Verfahren und eine Vorrichtung der eingangs genannten Art anzugeben, die eine wirtschaftliche Produktion einer Mehrzahl der genannten Bauelemente ermöglichen.

Die Erfindung löst diese Aufgabe durch ein Verfahren mit den Merkmalen des Patentanspruchs 1. Weiter wird die Aufgabe mit einer Vorrichtung gemäß den Merkmalen des Patentanspruchs 16 gelöst.

Ausgestaltungen der Erfindung sind in Unteransprüchen gekennzeichnet.

Die Erfindung hat den Vorteil, dass das Befüllen und Verschließen der Bauelemente automatisiert, schnell und kostengünstig erfolgen kann. Anpassungen an andere Gehäuseformen oder andere Flüssigkeiten sind einfach möglich.

Als weiterer Vorteil verbessern sich mit der Erfindung die elektrischen und mechanischen Parameter der fertigen Bauelemente, weil die Prozessparameter in engen Toleranzbereichen gehalten werden können.

Ein anderer Vorteil ist, dass der Verbrauch an flüchtiger Flüssigkeit optimiert werden kann. Durch automatisiert gesteuerte Druckstufungen beim Befüllen der Gehäuse kann eine schnelle Imprägnierung des Bauelements erreicht werden. Gleichzeitig wird die Flüssigkeit ohne größere Verluste fast vollständig zum Imprägnieren eingesetzt.

Mit der Erfindung kann die Anzahl der bevorzugt auf einem Magazin angeordneten und exakt positionierten Bauelemente vorteilhaft auf die Anzahl der Befüllschritte und die Größe des Einfüllvolumens abgestimmt werden.

Weiterhin ermöglicht die Erfindung, dass das Kollektiv der Mehrzahl an Bauelementen bezüglich ihrer Zahl, Größe, Durchlaufzeit optimiert werden kann. So können beispielsweise bei einer Kammer mit mehreren Magazinen oder bei einem Mehrkammersystem ein Magazin mit Bauelementen befüllt werden und gleichzeitig ein zweites Magazin mit bereits befüllten Bauelementen verschlossen werden.

Schließlich lässt sich die Erfindung für unterschiedlichste Gehäuseformen der Bauelemente einsetzen; in Frage kommen sowohl runde als auch prismatische Gehäuseformen als auch solche Gehäuse, bei denen die elektrischen Außenanschlüsse radial oder axial angeordnet sind.

Weiterhin lässt sich die Erfindung für das Einfüllen leicht flüchtiger Flüssigkeit in beleibige Gehäuse benutzen, d. h. auch für das Einfüllen in Gehäuse anderer als elektrischer Bauelemente.

Die Imprägnierung des Bauelements kann ohne direkten Kontakt der Abgabevorrichtung der Flüssigkeit zur Einfüllöffung des Gehäuses erfolgen. Dadurch werden mögliche Schäden an der Einfüllöffung, die zu Undichtigkeiten beim Verschließen führen könnten, vermieden. Dies führt zu einer Ausbeuteverbesserung.

Die leicht flüchtige Flüssigkeit bzw. der leicht flüchtige organische Elektrolyt wird mittels der erfindungsgemäßen Vorrichtung in einem Vorratsbehälter vor der Imprägnierung auf einen bestimmten Druck gebracht, wodurch ein Verdampfen des leicht flüchten Elektrolyten minimiert wird. So wird eine Gasblasenbildung während des Imprägnierens bzw. Einfüllvorgangs vermieden.

Die leicht flüchtige Flüssigkeit bzw. der organische Elektrolyt wird mittels der programmierbaren Ablaufsteuerung der Vorrichtung bevorzugt bei einem Druck, der über dem Dampfdruck des leichtflüchtigen organischen Lösungsmittels liegt, in das Gehäuse abgefüllt. Dadurch werden die Zufuhrleitungen nicht verstopft.

Die Erfindung wird nachfolgend an Hand eines in den Figuren der Zeichnung dargestellten Ausführungsbeispiels näher beschrieben. Es zeigen
- Fig. 1: eine schematische Darstellung der erfindungsgemäßen Vorrichtung und des Verfahrens und
- Fig. 2: eine detailliertere schematische Darstellung der erfindungsgemäßen Vorrichtung.

Die Einfüll-und Verschließvorrichtung gemäß den Figuren wird zentral von einer Ablaufsteuerungseinrichtung 10 gesteuert, für die für Test- und Einstellzwecke mittels eines Schalters auch ein manueller Betrieb der gesamten Anlage vorgesehen werden kann. Die Ablaufsteuerungseinrichtung 10 ist bevorzugt eine speicherprogrammierbare Einrichtung, die einen oder mehrere Mikroprozessoren mit zugeordneten Speichereinheiten enthält. Die Ablaufsteuerungseinrichtung 10 steuert mittels einer Mehrzahl von Kommunikationsleitungen K die Temperatur-, Vakuum- und Füllstandseinrichtungen der Vorrichtung sowie die entsprechenden Ventile und Motoren z.B. der Transportvorrichtungen 2 und der Türen 7. Dabei kommuniziert die Ablaufsteuerungseinrichtung 10 mit nicht dargestellten Mess- bzw. Erkennungssystemen für die Prozessparameter der Anlage bzw. Vorrichtung, die entsprechende optische, mechanische oder elekrische Sensoren umfassen, ebenfalls über entsprechend zugeordnete Kommunikationsleitungen K.

Die zu befüllenden Bauelemente 4, z.B. die zu imprägnierenden elektrochemischen Doppelschichtkondensatoren, sind auf Magazinen 3 positioniert und werden zunächst in einer Kammer 16 getrocknet. In einem derartigen Trocknungsofen erfolgt die Trocknung der Bauelemente, um diese vor dem Einfüllen der Flüssigkeit zu konditionieren.

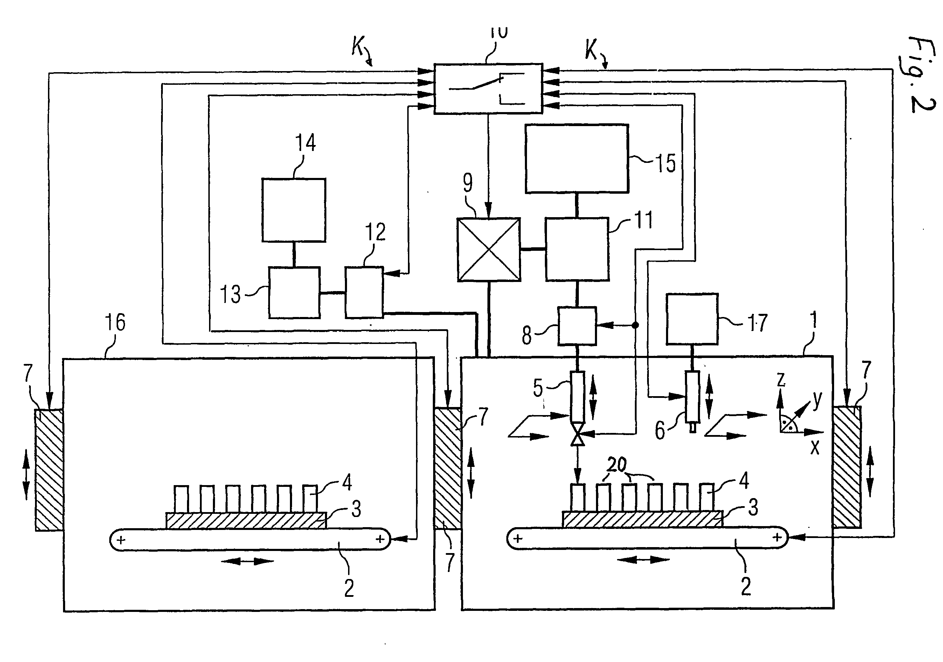

Ein oder je nach Größe der Anlage auch mehrere Magazine 3 können durch eine verschließbare Tür 7 auf einem Förderband 2 in die Kammer 1 transportiert werden. Mit Hilfe des Förderbandes 2 kann das Magazin 3 in der Kammer 1 positioniert werden. Die Positionierung kann z.B. linear in x-Richtung erfolgen oder aber auch zweidimensional mit einer weiteren Richtung in x-/y-Richtung mit der y-Richtung quer zur Transportrichtung des Förderbandes (per Koordinatensystem gemäß Fig. 2 dargestellt).

Die Bauelemente können auf jeden Magazin in n*m-Matrixform mit n,m = 1,2,3,....., d.h. auch als Einzelreihe aufgestellt sein. Sie haben definierte Abstände zueinander, so dass ihre Position eindeutig definiert ist. Gegebenenfalls genügt die Messung der Position eines Bauelements, um die Positionen der anderen Bauelemente zu kennen. Natürlich kann auch die Position einer Matrixspalte oder einer Matrixreihe oder jedes Bauelements gemessen und an die Ablaufsteuerungseinrichtung 10 kommuniziert werden. In der Kammer 1 kann mit Hilfe einer Vakuumpumpe 9 ein frei wählbarer Unterdruck erzeugt werden, der bevorzugt über dem Dampfdruck der einzufüllenden Flüssigkeit liegt.

In der Kammer 1 befindet sich ein oder mehrere Abgabevorrichtungen 5 für die Flüssigkeit. Die Abgabevorrichtungen enthalten z.B. Ventile. Die Abgabevorrichtungen 5 müssen relativ zu den zu befüllenden Gehäusen bewegbar sein. Wenn also z.B. das Magazin 3 in der Kammer 1 fest positioniert ist oder nur linear verfahrbar ist, ist eine Abgabevorrichtung 5 in x- und/oder y-Richtung frei beweglich und kann mit Hilfe der Ablaufsteuerungseinrichtung 10 und eines oder mehrerer nicht separat dargestellter Erkennungssysteme über der oder den Einfüllöffnungen der Bauelemente 4 positioniert werden. Bei einer fixen Abgabevorrichtung muss das Magazin frei positionierbar sein; dann benötigt man aber eine größere Kammer.

Durch die Abgabevorrichtung 5 kann aus einem Vorratsbehälter 11 der leicht flüchtige organische Elektrolyt z.B. mit Hilfe eines Massendurchflußreglers 8 dosiert werden. Während des Einfüllvorgangs braucht kein direkter Kontakt zwischen der Abgabedüse der Abgabevorrichtung und der Öffnung des Bauelements zu bestehen.

Jedes Bauelement kann ein oder mehrere Einfüllöffnungen 20 aufweisen. Im Extremfall ist dies der ganze Querschnitt des Bauelements, wenn dieses noch keinen Deckel hat, der später aufgeschweißt oder aufgebördelt oder auch gefalzt werden muss. Ansonsten werden die Einfüllöffnungen 20 bevorzugt vernietet, gequetscht oder zugeschweißt.

Der leichtflüchtige organische Elektrolyt im Vorratsbehälter 11 kann mit Hilfe der Vakuumpumpe 9 bei einem Unterdruck, der über dem Dampfdruck des leichtflüchtigen organischen Elektrolyt liegt, entgast werden. Der Vorratsbehälter 11 wird aus einem Fass 15 mit nicht entgastem leicht flüchtigen organischen Elektrolyten gespeist.

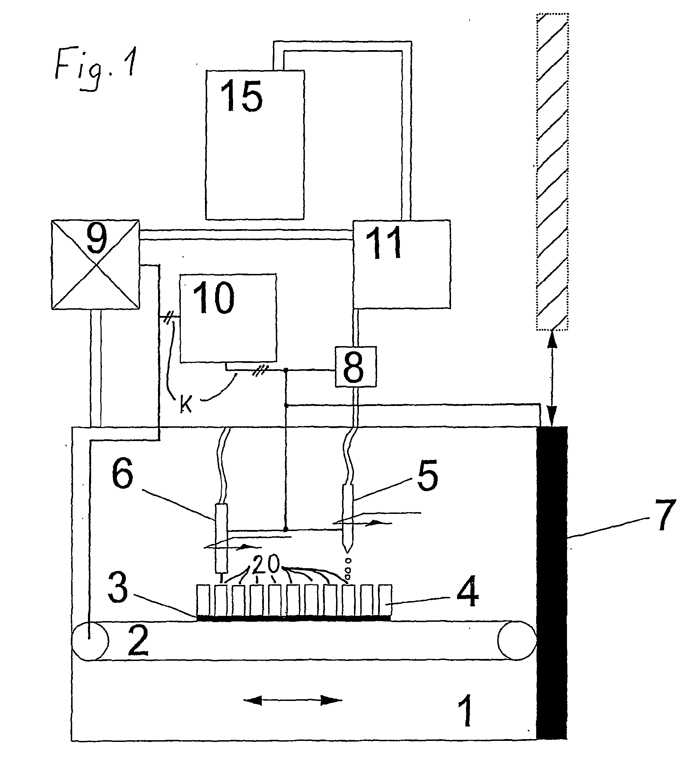

In der Kammer 1 wird mit Hilfe einer Druckgasvorrichtung ein Unterdruck erzeugt. Die Druckgasvorrichtung umfasst eine Vakuumpumpe 9 und eine in Fig. 1 nicht dargestellte Einrichtung 12, 13, 14 zur Erzeugung einer Atmosphäre, z.B. mit einem Inertgas. Die Einrichtung umfasst in an sich bekannter Weise Ventile 12, gegebenenfalls eine Kühleinrichtung 13 und einen Gasspeicher 14 zur Versorgung der Kammer 1 mit der Gasatmosphäre.

Der mittels der Vakuumpumpe 9 erzeugte Unterdruck korreliert zum Druck des Vorratsbehälters 11 und liegt über dem Dampfdruck des leichtflüchtigen organischen Elektrolyten. Dann wird die Abgabevorrichtung 5 mit Hilfe des Erkennungssystems über der Einfüllöffnung eines Bauelements 4 positioniert. Bei mehreren Abgabesystemen kann dieser Schritt parallel bei mehreren Bauelementen erfolgen. Danach wird durch die Abgabevorrichtung 5 eine über den Massendurchflußregler 8 gesteuerte Menge des leicht flüchtigen Elektrolyten durch die Einfüllöffnung in den oder die Bauelemente eindosiert. Die Menge wird dabei so eingestellt, dass der im Bauelement vorhandene Freiraum in definierter Weise mit dem leichtflüchtigen organischem Elektrolyt gefüllt wird.

Anschließend wird die Abgabevorrichtung 5 über der Einfüllöffnung des nächsten Bauelements 4 positioniert. Diese Verfahrensschritte werden solange wiederholt bis alle auf dem Magazin 3 befindlichen Bauelemente 4 einmal befüllt worden sind. Dann wird in der Kammer 1 mit Hilfe eines Begasungsventils 12 und/oder der Vakuumpmpe 9 ein höherer, z.B. Atmosphärendruck eingestellt. Dadurch wird der leichtflüchte organische Elektrolyt in die Bauelemente 4, z.B. die Elektrodenwickel elektrochemischer Doppelschichtkondensatoren hineingedrückt.

Sämtliche bis hierhin beschriebenen Schritte können bei Bedarf mit entsprechenden Anpassungen der Prozessparameter, z.B. unterschiedlichen Drücken, so lange wiederholt werden, bis die erforderliche Menge des leicht flüchtigen Elektrolyten in jedes der Bauelemente 4 imprägniert worden ist.

Desweiteren enthält die Vorrichtung einen oder mehrere Schließvorrichtungen 6, 17, von der sich in der Kammer 1 ein oder mehrere Verschließautomaten 6, z. B Vernietungsautomaten befinden. Diese sind ebenfalls relativ zu den Gehäusen bewegbar und z.B. in x- und/oder y-Richtung frei beweglich. Ein Verschließautomat ist mit einer oder mehreren nicht in der Zeichnung dargestellten Erkennungseinheiten ausgestattet, die mit der Ablaufsteuerungseinrichtung 10 kommunizieren und mit deren Hilfe es möglich ist, nach dem Imprägnieren jede der Einfüllöffnungen der Bauelemente passgenau z.B. mit einer Niet zu verschließen. Die Schließvorrichtung wird mittels eines nur in Fig. 2 dargestellten Vorratsbehältnisses 17 mit Schließmitteln, z.B. Nieten versorgt. Dies kann ein Becherblindniet sein, bei dem der Nietbecher mit dem Nietnagel auf die zu verschließende Öffnung gesetzt wird. Nach dem Herausziehen des Nietnagels ist die Öffnung durch den gebildeten Grat verschlossen.

Die Einfüllöffnungen der imprägnierten Bauelemente werden beim Verfahrensschritt des Verschließens der Gehäuse bei einem frei programmierbaren Druck, der über dem Dampfdruck der leicht flüchtigen Flüssigkeit liegt, mit dem Verschließungsautomaten 6 z.B. mit einer Niet verschlossen.

Bei einer entsprechend großen Kammer oder bei zwei Kammern ist es möglich, auch mehrere Magazine parallel gleichzeitig zu bearbeiten, d.h. gleichzeitig zu befüllen und zu verschließen.

Danach kann in an sich bekannter Weise die kontaminierte Atmosphäre gegen eine frische Atmosphäre ausgetauscht werden, die Tür 7 geöffnet und das oder die Magazine 3 mit den verschlossenen Bauelementen 4 z.B. über das Förderband 2 aus der Kammer 1 entfernt werden. Bei zwei Türen 7 ist es wie dargestellt möglich, das Magazin auf der der Einfuhrseite gegenüber liegenden Seite aus der Kammer auszutransportieren, zum Beispiel in eine nicht dargestellte dritte Kammer oder in einen weiteren Trocknungsofen.

Das Befüllen und das Verschließen der Bauelemente erfolgt in der Kammer bevorzugt mit einer Druckgasvorrichtung aus Vakuumpumpe, Begasungsventil und Vorratsgefäß unter Inertgasatmosphäre. Als Inertgas wird ein Element der achten Hauptgruppe des Periodensystems, insbesondere Argon, Stickstoff, Kohlendioxid oder Helium verwendet.

Bevorzugt wird das aus einem Vorratsgefäß 14 bereit gestellte Inertgas mittels einer Kühleinrichtung 13, z.B. eines Wärmetauschers, gekühlt. Der Wassergehalt und der Sauerstoffgehalt der Inertgasatmosphäre sollen unterhalb 100 ppm liegen.

Die einzufüllende Flüssigkeit wird bevorzugt auf eine Temperatur gekühlt, die über ihrer Kristallisationstemperatur liegt. Dadurch verringern sich das Einfüllvolumen und der Dampfdruck. Tiefere Drücke bedeuten aber eine geringere Gasung während der Imprägnierung.

Als Flüssigkeiten können u.a. auch nach dem Einfüllen gelifizierbare oder polymerisierbare Flüssigkeiten verwendet werden. Weiterhin können Nitrile wie Acetonitril, ein Glykol, ein Lackton, ein Sulfon, ein Karbonsäureester, ein Keton, ein Aldehyd oder ein Karbonat oder deren Mischungen, in denen ein oder mehrere Leitsalze gelöst sind, eingefüllt werden. Schließlich können als Flüssigkeit Salze eingefüllt werden, die bei Raumtemperatur geschmolzen sind. Ebenfalls können Salzmischungen oder Mischungen von Salzen mit den vorgenannten Flüssigkeiten, gegebenenfalls unter Verwendung von Lösungsmittelln verwendet werden.

Als elektrische Bauelemente können Lithium-Ionen-Zellen, Lithium-Thionylchlorid-Zellen oder Lithium-Schwefeldioxid-Zellen, elektrochemische Doppelschichtkondensatoren, Aluminum-Elektrolyt-Kondensatoren, Hybridkondensatoren oder Pseudokondensatoren befüllt und verschlossen werden.

Vor dem Einfahren in die Kammer können die Bauelemente wie beschrieben getrocknet und anschließend gekühlt werden.

Es versteht sich, dass mit der erfindungsgemäßen Vorrichtung auch andere als das beschriebene Verfahren zum Einfüllen von Flüssigkeiten in und zum Verschließen von Bauelementgehäusen eingesetzt werden können. In diesen Fällen ist die Ablaufsteuerungseinrichtung entsprechend anders zu programmieren.

## Patentansprüche

1. Verfahren zum Einfüllen von flüchtigen Flüssigkeiten in Gehäuse elektrischer Bauelemente, insbesondere passiver elektrischer Bauelemente oder elektrochemischer Zellen, und zum Verschließen der Gehäuse, mit folgenden Schritten:
a) die Bauelemente (4) werden in eine evakuierbare Kammer (1) transportiert,
b) in der Kammer wird eine Inertgasatmosphäre mit einem ersten Druck erzeugt, dessen Höhe oberhalb des Dampfdrucks der Flüssigkeit und unterhalb Atmosphärendruck liegt,
c) in einem Vorratsbehälter (11) wird die Flüssigkeit auf einen zweiten Druck gebracht, der sich vom ersten Druck unterscheidet,
d) mittels mindestens einer Abgabevorrichtung (5) wird eine dem freien Volumen eines Gehäuses zugeordnete Menge der Flüssigkeit durch mindestens eine in jedem Gehäuse angeordnete Einfüllöffnung (20) gefüllt,
e) der Druck in der Kammer wird auf einen über dem ersten Druck liegenden dritten Druck erhöht,
f) die Schritte d) und e) werden wiederholt, bis jeweils eine vorgegebene Flüssigkeitsmenge in die Gehäuse eingefüllt ist, wobei der erste und der dritte Druck und die dem freien Volumen des Gehäuses zugeordnete Menge der Flüssigkeit variierbare Parameter sind, und
g) die Einfüllöffnungen der Gehäuse werden in einer Inertgasatmosphäre mit einem vierten Druck dicht verschlossen.

2. Verfahren nach Anspruch 1,
**dadurch gekennzeichnet, dass**
als Inertgas ein Element der achten Hauptgruppe des Periodensystems, insbesondere Argon, Stickstoff, Kohlendioxid oder Helium verwendet wird.

3. Verfahren nach Anspruch 1 oder 2,
**dadurch gekennzeichnet, dass**
das Inertgas gekühlt wird.

4. Verfahren nach einem der Ansprüche 1 bis 3,
**dadurch gekennzeichnet, dass**
der Wassergehalt und der Sauerstoffgehalt der Inertgasatmosphäre unterhalb 100 ppm liegt.

5. Verfahren nach einem der Ansprüche 1 bis 4,
**dadurch gekennzeichnet, dass**
die Flüssigkeit auf eine Temperatur gekühlt ist, die über der Kristallisationstemperatur liegt.

6. Verfahren nach einem der Ansprüche 1 bis 5,
**dadurch gekennzeichnet, dass**
ein nach dem Einfüllen gelifizierbare oder polymerisierbare Flüssigkeit verwendet wird.

7. Verfahren nach einem der Ansprüche 1 bis 6,
**dadurch gekennzeichnet, dass**
als Flüssigkeit Nitril, ein Glykol, ein Lakton, ein Sulfon, ein Karbonsäureester, ein Keton, ein Aldehyd oder ein Karbonat oder deren Mischungen, in denen ein oder mehrere Leitsalze gelöst sind, eingefüllt wird.

8. Verfahren nach einem der Ansprüche 1 bis 7,
**dadurch gekennzeichnet, dass**
als Flüssigkeit Salze eingefüllt werden, die bei Raumtemperatur geschmolzen sind.

9. Verfahren nach einem der Ansprüche 1 bis 8,
**dadurch gekennzeichnet, dass**
die Gehäuse von Litium-Ionen-Zellen, von Litium-Thionylchlorid-Zellen oder Litium-Schwefeldioxid-Zellen befüllt und verschlossen werden.

10. Verfahren nach einem der Ansprüche 1 bis 8,
**dadurch gekennzeichnet, dass**
die Gehäuse von elektrochemischen Doppelschichtkondensatoren, Aluminum-Elektrolyt-Kondensatoren, Hybridkondensatoren oder Pseudokondensatoren befüllt und verschlossen werden.

11. Verfahren nach einem der Ansprüche 1 bis 10,
**dadurch gekennzeichnet, dass**
die Einfüllöffnungen der Gehäuse durch Nieten, durch Bördeln oder durch Verschweißen verschlossen werden.

12. Verfahren nach einem der Ansprüche 1 bis 11,
**dadurch gekennzeichnet, dass**
als vierter Druck ein Unterdruck oder ein Überdruck eingestellt wird.

13. Verfahren nach einem der Ansprüche 1 bis 12,
**dadurch gekennzeichnet, dass**
die Bauelemente vor Schritt a) getrocknet und anschließend gekühlt werden.

14. Verfahren nach einem der Ansprüche 1 bis 13,
**dadurch gekennzeichnet, dass**
das Befüllen und das Verschließen in zwei getennten Kammern durchgeführt wird.

15. Verfahren nach einem der Ansprüche 1 bis 14,
**dadurch gekennzeichnet, dass**
die Bauelemente auf Paletten transportiert werden und die Position jedes Bauelements bestimmbar ist.

16. Vorrichtung zum Einfüllen flüchtiger Flüssigkeiten in Gehäuse elektrischer Bauelemente, insbesondere passiver elektrischer Bauelemente oder elektrochemischer Zellen, und zum Verschließen der Gehäuse, mit
- einer evakuierbaren Kammer (1),
- einer Transportvorrichtung (2) zum Transport der Bauelemente (4),
- einer Gasdruckvorrichtung (9, 12, 13, 14) zur Erzeugung einer Gasdruckatmosphäre in der Kammer,
- einer Füllvorrichtung (5, 8, 11, 15) zum Einfüllen einer flüchtigen Flüssigkeit in ein Bauelement (4),
- einer Schließvorrichtung (6, 17) zum Verschließen des Bauelements (4) und
- einer programmierbaren Ablaufsteuerungseinrichtung (10), die die Transportvorrichtung (2), die Gasdruckvorrichtung (9, 12, 13, 14), die Füllvorrichtung (5, 8, 11, 15) und/oder die Schließvorrichtung (6) so steuert, dass diese Vorrichtungen nach einem vorgegebenen Ablauf zusammenwirken.

17. Vorrichtung nach Anspruch 16,
**dadurch gekennzeichnet, dass**
die programmierbare Ablaufsteuerungseinrichtung (10) eine speicherprogammierbare Steuerung mit einem Mikroprozessor umfasst.

18. Vorrichtung nach Anspruch 16 oder 17,
**dadurch gekennzeichnet, dass**
die Druckgasvorrichtung eine Vakuumpumpe (9), einen Gasspeicher (14) und ein Begasungsventil (12) umfasst.

19. Vorrichtung nach Anspruch 18,
**dadurch gekennzeichnet, dass**
als Druckgas ein Inertgas dient.

20. Vorrichtung nach Anspruch 18 oder 19,
**dadurch gekennzeichnet, dass**
das Druckgas mittels einer Kühleinrichtung (13) gekühlt wird.

21. Vorrichtung nach einem der Ansprüche 16 bis 20,
**dadurch gekennzeichnet, dass**
die Füllvorrichtung (5, 8, 11, 15) eine Abgabevorrichtung (5) umfasst, mit der die Flüssigkeit in die Gehäuse gefüllt wird.

22. Vorrichtung nach Anspruch 21,
**dadurch gekennzeichnet, dass**
die Abgabevorrichtung (5) in vorgegebenen Richtungen bewegbar ist.

23. Vorrichtung nach Anspruch 21 oder 22,
**dadurch gekennzeichnet, dass**
die Füllvorrichtung (5, 8, 11, 15) einen Vorratsbehälter (11) und einen Massendurchflussregler (8) umfasst.

24. Vorrichtung nach Anspruch 23,
**dadurch gekennzeichnet, dass**
der Vorratsbehälter (11) mit der Vakuumpmpe (9) auf einen vorgegebenen Druck einstellbar ist.

25. Vorrichtung nach einem der Ansprüche 16 bis 24,
**dadurch gekennzeichnet, dass**
die Schließvorrichtung (6, 17) einen Verschließautomaten (6) und ein Vorratsbehältnis (17) umfasst.

26. Vorrichtung nach Anspruch 25,
**dadurch gekennzeichnet, dass**
der Verschließautomat (6) in vorgegebenen Richtungen bewegbar ist.

27. Vorrichtung nach einem der Ansprüche 16 bis 26,
**dadurch gekennzeichnet, dass**
an die Kammer (1) eine weitere Kammer (16) angekoppelt ist und die Kammern (1, 16) über eine Tür (7) miteinander verbunden sind.

28. Vorrichtung nach Anspruch 27,
**dadurch gekennzeichnet, dass**
die weitere Kammer (16) eine Prozesskammer oder ein Trocknungsofen ist.

29. Vorrichtung nach Anspruch 27 oder 28,
**dadurch gekennzeichnet, dass**
die Abgabevorrichtung (5) in der Kammer (1) und der Verschließautomat in der weiteren Kammer (16) angeordnet sind.

## Claims

1. Method for introducing volatile liquids into housings of electrical components, in particular of passive electrical components or of electrochemical cells, and for closing the housings, comprising the following steps:
a) the components (4) are conveyed into an evacuable chamber (1),
b) an inert-gas atmosphere with a first pressure, which is higher than the vapour pressure of the liquid and below atmospheric pressure, is generated in the chamber,
c) the liquid is brought to a second pressure, which differs from the first pressure, in a storage vessel (11),
d) a quantity of liquid which is associated with the free volume of a housing is introduced through at least one filling opening (20) arranged in each housing by means of at least one delivery device (5),
e) the pressure in the chamber is increased to a third pressure, which is higher than the first pressure,
f) steps d) and e) are repeated until in each case a predetermined quantity of liquid has been introduced into the housings, the first and third pressures and the quantity of liquid associated with the free volume of the housing being variable parameters, and
g) the filling openings in the housings are closed and sealed in an inert-gas atmosphere with a fourth pressure.

2. Method according to Claim 1, **characterized in that** the inert gas used is an element from the eighth main group of the periodic system, in particular argon, nitrogen, carbon dioxide or helium.

3. Method according to Claim 1 or 2, **characterized in that** the inert gas is cooled.

4. Method according to one of Claims 1 to 3, **characterized in that** the water content and the oxygen content of the inert-gas atmosphere are below 100 ppm.

5. Method according to one of Claims 1 to 4, **characterized in that** the liquid is cooled to a temperature which is above the crystallization point.

6. Method according to one of Claims 1 to 5, **characterized in that** a liquid which can be gelled or polymerized after it has been introduced is used.

7. Method according to one of Claims 1 to 6, **characterized in that** the liquid introduced is nitrile, a glycol, a lactone, a sulphone, a carboxylic acid ester, a ketone, an aldehyde or a carbonate or mixtures thereof in which one or more conductive salts are dissolved.

8. Method according to one of Claims 1 to 7, **characterized in that** the liquid introduced is salts which are molten at room temperature.

9. Method according to one of Claims 1 to 8, **characterized in that** the housings of lithium ion cells, of lithium-thionyl chloride cells or lithium-sulphur dioxide cells are filled and closed.

10. Method according to one of Claims 1 to 8, **characterized in that** the housings of electrochemical double-layer capacitors, aluminium electrolyte capacitors, hybrid capacitors or pseudo-capacitors are filled and closed.

11. Method according to one of Claims 1 to 10, **characterized in that** the filling openings in the housings are closed up by riveting, flanging or welding.

12. Method according to one of Claims 1 to 11, **characterized in that** the fourth pressure set is a subatmospheric pressure or a superatmospheric pressure.

13. Method according to one of Claims 1 to 12, **characterized in that** before step a) the components are dried and then cooled.

14. Method according to one of Claims 1 to 13, **characterized in that** the filling and the closing are carried out in two separate chambers.

15. Method according to one of Claims 1 to 14, **characterized in that** the components are conveyed on pallets and the position of each component can be determined.

16. Device for introducing volatile liquids into housings of electrical components, in particular of passive electrical components or electrochemical cells, and for closing the housings, having
- an evacuable chamber (1),
- a conveyor device (2) for conveying the components (4),
- a gas pressure device (9, 12, 13, 14) for generating a gas pressure atmosphere in the chamber,
- a filling device (5, 8, 11, 15) for introducing a volatile liquid into a component (4),
- a closing device (6, 17) for closing the component (4), and
- a programmable sequence control means (10), which controls the conveyor device (2), the gas pressure device (9, 12, 13, 14), the filling device (5, 8, 11, 15) and/or the closing device (6) in such a way that these devices interact according to a predetermined sequence.

17. Device according to Claim 16, **characterized in that** the programmable sequence control means (10) comprises a programmable-memory control with a microprocessor.

18. Device according to Claim 16 or 17, **characterized in that** the gas pressure device comprises a vacuum pump (9), a gas reservoir (14) and a gasification valve (12).

19. Device according to Claim 18, **characterized in that** the compressed gas used is an inert gas.

20. Device according to Claim 18 or 19, **characterized in that** the compressed gas is cooled by means of a cooling means (13).

21. Device according to one of Claims 16 to 20, **characterized in that** the filling device (5, 8, 11, 15) comprises a delivery device (5) which is used to introduce the liquid into the housing.

22. Device according to Claim 21, **characterized in that** the delivery device (5) can be moved in predetermined directions.

23. Device according to Claim 21 or 22, **characterized in that** the filling device (5, 8, 11, 15) comprises a storage vessel (11) and a mass-flow controller (8).

24. Device according to Claim 23, **characterized in that** the storage vessel (11) can be set to a predetermined pressure by the vacuum pump (9).

25. Device according to one of Claims 16 to 24, **characterized in that** the closing device (6, 17) comprises an automated closure unit (6) and a storage container (17).

26. Device according to Claim 25, **characterized in that** the automated closure unit (6) can be moved in predetermined directions.

27. Device according to one of Claims 16 to 26, **characterized in that** a further chamber (16) is coupled to the chamber (1), and the chambers (1, 16) are connected to one another via a door (7).

28. Device according to Claim 27, **characterized in that** the further chamber (16) is a process chamber or a drying oven.

29. Device according to Claim 27 or 28, **characterized in that** the delivery device (5) is arranged in the chamber (1) and the automated closure unit is arranged in the further chamber (16).

## Revendications

1. Procédé pour remplir des boîtiers de composants électriques de liquides volatils, notamment de composants électriques ou des piles électrochimiques, et pour fermer les boîtiers, comprenant les stades suivants :
a) on transporte les composants (4) dans une chambre (1) pouvant être mise sous vide ;
b) on produit dans la chambre une atmosphère de gaz inerte ayant une première pression dont le niveau est supérieur à la tension de vapeur du liquide et inférieur à la pression atmosphérique ;
c) on porte dans un réservoir (11) le liquide à une deuxième pression qui différente de la première pression ;
d) on introduit à l'aide d'au moins un dispositif (5) de distribution une quantité du liquide associée au volume libre du boîtier par au moins une ouverture (20) de remplissage prévue dans chaque boîtier ;
e) on porte la pression dans la chambre à une troisième pression supérieure à la première pression ;
f) on répète les stades d) et e) jusqu'à ce que le boîtier soit empli d'une quantité donnée à l'avance de liquide, la première et la troisième pressions et la quantité de liquide associée au volume libre du boîtier étant des paramètres variables ; et
g) on ferme d'une manière étanche les ouvertures de remplissage des boîtiers dans une atmosphère de gaz inerte sous une quatrième pression.

2. Procédé suivant la revendication 1, **caractérisé en ce que** l'on utilise comme gaz inerte un élément du huitième groupe principal de la classification périodique des éléments, notamment de l'argon, de l'azote, du dioxyde de carbone et de l'hélium.

3. Procédé suivant la revendication 1 ou 2, **caractérisé en ce que** l'on refroidit le gaz inerte.

4. Procédé suivant l'une des revendications 1 à 3, **caractérisé en ce que** la teneur en eau et la teneur en oxygène de l'atmosphère de gaz inerte est inférieure à 100 ppm.

5. Procédé suivant l'une des revendications 1 à 4, **caractérisé en ce que** l'on refroidit le liquide à une température qui est supérieure au point de cristallisation.

6. Procédé suivant l'une des revendications 1 à 5, **caractérisé en ce que** l'on utilise un liquide pouvant se prendre en gel ou pouvant polymériser après le remplissage.

7. Procédé suivant l'une des revendications 1 à 6, **caractérisé en ce que** l'on emplit comme liquide de nitrile, d'un glycol, d'une lactone, d'une sulfone, d'un ester d'acide carboxylique, d'une cétone, d'un aldéhyde ou d'un carbonate ou de leurs mélanges, dans lesquels sont dissous un ou plusieurs sels conducteurs.

8. Procédé suivant l'une des revendications 1 à 7, **caractérisé en ce que** l'on emplit comme liquides de sels qui sont fondus à température ambiante.

9. Procédé suivant l'une des revendications 1 à 8, **caractérisé en ce que** l'on emplit et on ferme les boîtiers de piles à ion lithium de piles au lithium-chlorure de thionyle ou de piles au lithium dioxyde de soufre.

10. Procédé suivant l'une des revendications 1 à 8, **caractérisé en ce que** l'on emplit et on ferme les boîtiers de condensateurs électrochimiques à couche double, de condensateurs électrolytiques à l'aluminium, de condensateurs hybrides ou de pseudocondensateurs.

11. Procédé suivant l'une des revendications 1 à 10, **caractérisé en ce que** l'on ferme les ouvertures de remplissage des boîtiers par rivetage, par agrafage ou par soudage.

12. Procédé suivant l'une des revendications 1 à 11, **caractérisé en ce que** l'on établit comme quatrième pression une dépression ou une surpression.

13. Procédé suivant l'une des revendications 1 à 12, **caractérisé en ce que** l'on sèche les composants avant le stade a) et ensuite on les refroidit.

14. Procédé suivant l'une des revendications 1 à 13, **caractérisé en ce que** l'on effectue le remplissage et la fermeture dans deux chambres distinctes.

15. Procédé suivant l'une des revendications 1 à 14, **caractérisé en ce que** l'on transporte des composants sur des palettes et la position de chaque composant peut être déterminée.

16. Installation de remplissage de boîtiers de composants électriques par des liquides volatils, notamment de composants électriques passifs ou de piles électrochimiques, et de fermeture des boîtiers comprenant
- une chambre (1) pouvant être mise sous vide ;
- un dispositif (2) de transport des composants (4) ;
- un dispositif (9, 12, 13, 14) de gaz comprimé pour la production d'une atmosphère de gaz comprimé dans la chambre ;
- un dispositif (5, 8, 11, 15) de remplissage pour remplir un composant (4) de liquide volatil ;
- un dispositif (6, 17) de fermeture pour fermer le composant (4) ; et
- un dispositif (10) de commande de déroulement programmable qui commande le dispositif (2) de transport, le dispositif (9, 12, 13, 14) de gaz comprimé, le dispositif (5, 8, 11, 15) de remplissage et/ou le dispositif (6) de fermeture de façon à ce que ces dispositifs coopèrent suivant un déroulement prescrit.

17. Installation suivant la revendication 16, **caractérisé en ce que** le dispositif (10) de commande de déroulement programmable comprend un automate à programme enregistré ayant un microprocesseur.

18. Installation suivant la revendication 16 ou 17, **caractérisé en ce que** le dispositif de gaz comprimé comprend une pompe (9) à vide, un réservoir (14) de gaz et une vanne (12) d'envoi de gaz.

19. Installation suivant la revendication 18, **caractérisé en ce qu'**il est utilisé un gaz inerte comme gaz comprimé.

20. Installation suivant la revendication 18 ou 19, **caractérisé en ce que** le gaz comprimé est refroidi au moyen d'un dispositif (13) de refroidissement.

21. Installation suivant l'une des revendications 16 à 20, **caractérisé en ce que** le dispositif (5, 8, 11, 15) de remplissage comprend un dispositif (5) de distribution par lequel le boîtier est empli de liquide.

22. Installation suivant la revendication 21, **caractérisé en ce que** le dispositif (5) de distribution est mobile dans une direction donnée à l'avance.

23. Installation suivant la revendication 21 ou 22, **caractérisé en ce que** le dispositif (5, 8, 11, 15) de remplissage comprend un réservoir (11) et un régulateur (8) de débit massique.

24. Installation suivant la revendication 23, **caractérisé en ce que** le réservoir (11) peut être réglé par la pompe (9) à vide à une pression donnée à l'avance.

25. Installation suivant l'une des revendications 16 à 24, **caractérisé en ce que** le dispositif (6, 17) de fermeture comprend un automate (6) de fermeture et un réservoir (17).

26. Installation suivant la revendication 25, **caractérisé en ce que** l'automate (6) de fermeture est mobile dans une direction donnée à l'avance.

27. Installation suivant l'une des revendications 16 à 26, **caractérisé en ce qu'**à la chambre (1) est accouplée une autre chambre (16) et les chambres (1, 16) communiquent entre elles par une porte (7).

28. Installation suivant la revendication 27, **caractérisé en ce que** l'autre chambre (16) est une chambre dans laquelle on effectue des opérations ou un four de séchage.

29. Installation suivant la revendication 27 ou 28, **caractérisé en ce que** le dispositif (5) de distribution est placé dans la chambre (1) et l'automate de fermeture dans l'autre chambre (16).
